# EUROPÄISCHE PATENTSCHRIFT

(11) **EP 1 595 212 B1**
(45) Veröffentlichungstag und Bekanntmachung des Hinweises auf die Patenterteilung: **11.04.2007**
(21) Anmeldenummer: 04709203.6
(22) Anmeldetag: 09.02.2004
(51) Int. Cl.: G06F 11/10

(54) **VERFAHREN UND VORRICHTUNG ZUR ÜBERWACHUNG EINER ELEKTRONISCHEN STEUERUNG**
METHOD AND DEVICE FOR MONITORING AN ELECTRONIC CIRCUIT
PROCEDE ET DISPOSITIF POUR SURVEILLER UNE COMMANDE ELECTRONIQUE

(30) Priorität: 07.02.2003 DE 10305008
(43) Veröffentlichungstag der Anmeldung: 16.11.2005
(73) Patentinhaber: ROBERT BOSCH GMBH, 70442 Stuttgart (DE)
(72) Erfinder: WEBER, Jochen, 71706 Markgroeningen (DE); AUE, Axel, 70825 Korntal-Muenchingen (DE)
(86) Internationale Anmeldenummer: PCT/DE2004/000330
(87) Internationale Veröffentlichungsnummer: WO 2004/070487

(56) Entgegenhaltungen:
- DE-A- 19 964 012
- US-A- 6 101 614
- US-B1- 6 279 128

## Beschreibung

### Stand der Technik

Die Erfindung betrifft ein Verfahren und eine Vorrichtung zur Überwachung einer elektronischen Steuerung, wobei Steuerbefehle und/oder Daten, insbesondere Konstanten, als Code in wenigstens einem Speicher abgelegt sind, wobei bei laufenden Instruktionszugriffen der Code, insbesondere die Daten, über eine Wortleitung, insbesondere einen Datenbus, aus dem wenigstens einen Speicher zu einer Steuereinheit mit einer bestimmten Wortbreite, insbesondere zu einem Prozessor zur Steuerung von Betriebsabläufen übertragen wird, gemäß den unabhängigen Ansprüchen.

Aus dem Stand der Technik sind Verfahren bekannt, um elektronische Steuerungen zu überwachen, die darauf beruhen, dass über den gesamten oder einen Teil des Codebereichs zyklisch eine Checksumme gerechnet wird. Dadurch soll erkannt werden, wenn der Code verändert wurde; sei es durch Tuning oder durch Ladungsverlust des Speicherelementes. Die Checksummenberechnung für die Manipulation oder den Datenverlust sollte beim Start des Systems durchgeführt werden, um eine größtmögliche Sicherheit zu erreichen. Dies ist aber aufgrund der langen Zeiten, die sich aus einer vollständigen Checksummenberechnung über 100 KB bis zu einigen Megabyte-Code ergeben, nicht anwendbar, da das Startverhalten des Systems dadurch verzögert würde und der Kunde dies als Mangel empfindet.

Bei laufenden Instruktionszugriffen, also im Betrieb, ist eine Methode ausgeprägt durch eine Hardware bekannt, um beim Problem des Charge Loss von Flash-Speicherelementen einen Datenverlust zu verhindern. Bei dieser Methode mit der entsprechenden Hardware, auch ECC genannt (Error Check and Correction) sind nicht nur Speicherzellen vorhanden, die zur Speicherung der Information notwendig sind, also für Steuerbefehle und/oder Daten, den eigentlichen Code, sondern zusätzlich auch eine Anzahl von Speicherzellen mit einer Zusatzinformation, über die festgestellt werden kann, ob sich die Information in den Zellen zur Informationsspeicherung geändert hat. Dies wird bei laufenden Instruktionszugriffen, also im Betrieb, durch eine Hardware realisiert. Eine solche Hardware ist beispielsweise aus der DE 3833713 A1 sowie aus der US 6,279,128 B1 bekannt. Wie der Name schon sagt, ist über diese Zusatzinformationen auch teilweise eine Korrektur korrupter Daten möglich. Allerdings werden bei der genannten Methode im laufenden Betrieb, also bei laufenden Instruktionszugriffen, die entsprechenden Daten geprüft, so dass die Teile der Daten oder des Speichers, die seltener oder gar nicht durch laufende Instruktionszugriffe angesprochen werden, seltener oder gar nicht geprüft werden. Das bekannte Verfahren im Rahmen der genannten Offenlegungsschrift garantiert also nicht die regelmäßige Überwachung oder Überprüfung aller Speicherzellen eines Speichers.

Des Weiteren ist eine Eigenschaft moderner Flash-Speicher bekannt als Margin Read. Diese in der DE 199 64 012 A1 dargestellte Funktion stellt fest, ob die Information in den Speicherzellen auch im Normalmode, also dem Normalbetrieb, noch ausreichend ist, um eine fehlerfreie Funktion der Steuerung zu ermöglichen. Dazu werden die Speicherzellen nicht mit der normalen Bitleitungslast, sondern mit einer erhöhten Last ausgelesen bzw. der Zellstrom wird gemessen. Wenn die Ladung der Zelle noch ausreichend ist, wird die Information richtig ausgelesen. Wenn nicht, wird die falsche Information ausgelesen. Durch nochmaliges Lesen der Information ohne Anlegen der erhöhten Last und Vergleich der gelesenen Werte kann festgestellt werden, ob die Ladung noch ausreichend ist. Das Lesen der Informationen ist hier immer mit einer Checksummenberechnung sowohl für das Lesen mit Margin Read, als auch für das Lesen ohne Margin Read verbunden. Wenn die Checksummen beider Vorgänge gleich sind, kann davon ausgegangen werden, dass ausreichend Ladung aus den Speicherzellen vorhanden ist. Dies bedeutet aber, dass auch hier eine zeitaufwendige Checksummenberechnung, wie bereits oben angedeutet, durchgeführt werden muss mit den oben genannten Nachteilen.

Daraus ergibt sich die Aufgabe, ein Verfahren und eine Vorrichtung bereitzustellen, mit der die Überwachung bzw. Überprüfung aller Speicherzellen zyklisch möglich ist, indem die Zeit zur Überprüfung verkürzt wird.

### Vorteile der Erfindung

Die nachfolgende Lösung ermöglicht dem entsprechend die Überwachung bzw. Überprüfung aller Speicherzellen zyklisch und nahezu verzögerungsfrei, insbesondere vor dem Start.

Die Erfindung zeigt ein Verfahren und eine Vorrichtung zur Überwachung einer elektronischen Steuerung, wobei Steuerbefehle und/oder Daten als Code in wenigstens einem Speicher abgelegt sind, wobei bei laufenden Instruktionszugriffen der Code über eine Wortleitung aus dem wenigstens einen Speicher zu einer Steuereinheit mit einer bestimmten Wortbreite, insbesondere zu einem Prozessor zur Steuerung von Betriebsabläufen übertragen wird, wobei die Wortbreite den Code mehrerer Speicherzellen des Speichers umfasst und zu dem Code einer Wortbreite jeweils eine Zusatzinformation gebildet und im Speicher abgelegt ist, und außerhalb der laufenden Instruktionszugriffe der gesamte Code des wenigstens einen Speichers geprüft wird, indem je Wortbreite genau eine Speicherzelle ausgewählt wird und dadurch die vollständige Wortleitung bestehend aus dem Code mehrerer Speicherzellen entsprechend der Wortbreite und der Zusatzinformation aktiviert wird, wobei aus dem Code der vollständigen Wordleitung eine Prüfinformation gebildet wird und die Prüfinformation mit der gespeicherten Zusatzinformation verglichen wird.

Das bedeutet also entsprechend einer konkreten Ausführung ein Verfahren und eine Vorrichtung zur Überwachung einer elektronischen Steuerung, indem dafür gesorgt wird, daß in die sehr schnell vom Speicher befüllbare ECC-Einheit hintereinander die kompletten Daten bzw. Code eines wenigstens einen Speichers eingelesen und dort automatisch geprüft werden, ohne daß die kompletten Daten bzw. Code zeitaufwendig zu einem Prozessor übertragen werden müssen, wobei die ECC-Prüfbreite die Daten mehrerer Speicherzellen des Speichers umfasst und ein mehrfaches der Lesewortbreite des Prozessors ist, und zu den Daten einer ECC-Prüfbreite jeweils eine Zusatzinformation gebildet und im Speicher abgelegt ist, und so außerhalb der laufenden Instruktionszugriffe der gesamte Code/Datenbereich des wenigstens einen Speichers geprüft wird, indem pro Anforderung des Prozessors nach dem Inhalt einer einzigen Speicherzelle, aus dem Speicher die ECC-Einheit in voller ECC-Prüfbreite einschließlich Zusatzinformation befüllt wird, wobei aus den Daten der vollständigen ECC-Prüfbreite eine Prüfinformation gebildet wird und die Prüfinformation automatisch in der ECC-Einheit mit der gespeicherten Zusatzinformation verglichen wird Damit ist vorteilhafter Weise eine Bewertung der Korrektheit des gesamten Speicherinhaltes vor dem Start des Motors, insbesondere bei einem Kraftfahrzeug, möglich, da die Zeit, die dazu benötigt wird, wesentlich reduziert wurde. Zweckmäßiger Weise wird in einer speziellen Ausführungsform zusätzlich bei der ausgewählten Speicherzelle und/oder dem ausgewählten Speicher ein aktueller Ladungszustand ermittelt und dieser mit einer vorgebbaren Ladungsschwelle verglichen bzw. dem ausgewählten Speicher/Speicherzelle durch Verändern der Bitleitungslast eine veränderte Ladungsschwelle beim Auslesen von Daten und Prüfinformationen vorgegeben. D.h. dass bei der ausgewählten Speicherzelle zusätzlich eine aktueller Ladungszustand ermittelt bzw. die Daten mit veränderter Schwelle ausgelesen werden und die ECC-Einheit die Richtigkeit der Daten komplett prüft, ohne daß alle zu prüfenden Daten an den Prozessor übertragen werden müssen. Durch zusätzlichen Einsatz des eben genannten Margin Read bei dem erfindungsgemäßen Verfahren kann dann ohne weiteren Zeitaufwand zusätzlich auf zukünftige inkorrekte Information im Speicher geschlossen werden, da bei Ladungsverlust im Speicher die Daten bzw. Code und die Zusatzinformationen pro ECC-Prüfbreite bei Nicht-Konsistenz in der ECC-Einheit erkannt werden, was mit der reinen Checksummenmethode nicht möglich ist. Bei inkorrektem Ladezustand der Zellen kann der Start verhindert werden, und somit können sicherheitskritische Zustände aufgrund von fehlerhaftem Speicherinhalt vermieden werden. Das bedeutet, dass grundsätzlich bei dem erfindungsgemäßen Verfahren und der Vorrichtung auf dem Prozessor kein Vergleich der Daten bzw. des Codes stattfinden muß, da der Vergleich gegen die Zusatzinformation schon in der ECC-Einheit stattfindet.

Vorteilhafter Weise ist es somit möglich, dass auf dem Prozessor selbst keine Prüfung der Daten vorgenommen wird, sondern diese Prüfung direkt in der HW der ECC-Einheit stattfindet, ohne daß alle Daten über den Datenbus zum Prozessor übertragen werden müssen. Dabei ist weiterhin vorteilhaft wenn in einer besonderen Ausführungsform der Prozessor den Prüfcode nicht aus dem zu prüfenden Speicher abarbeitet, sondern aus einem anderen schnellen Speicher, insbesondere aus einem CodeCache oder separaten CodeRAM.

Weiterhin von Vorteil ist, dass die Auswahl der Speicherzelle der jeweiligen Wortbreite durch wiederholtes Setzen eines Inkrementes ausgehend von einer Startadresse einer ersten Speicherzelle erfolgt, wobei jede weitere Speicherzelle im Abstand des Inkrements ausgewählt wird. So ergibt sich in einer besonderen Ausprägung ein Verfahren derart, dass vom Prozessor nur die Daten einer Auswahl einzelner Speicherzellen angefordert werden und nicht alle Daten des Speichers, und ausgehend von einer Startadresse einer ersten Speicherzelle alle weiteren Auswahlen durch wiederholtes Addieren eines Inkrements zu der Startadresse im Abstand der ECC-Prüfbreite erfolgen..Das bedeutet auch hier, dass grundsätzlich bei dem erfindungsgemäßen Verfahren und der Vorrichtung auf dem Prozessor kein Vergleich der Daten bzw. des Codes stattfinden muß, da der Vergleich gegen die Zusatzinformation schon in der ECC-Einheit stattfindet. Weiterhin muß durch die Inkrementbildung der Prozessor nur die Daten einzelner Speicherzellen mit einem Inkrement im Abstand der ECC-Prüfbreite anfordern und nicht alle Daten des Speichers, da die Restlichen automatisch zusammen mit den Angeforderten vom Speicher in die ECC-Einheit übertragen und geprüft werden. Ausgehend von einer Startadresse einer ersten Speicherzelle muß also nur jeweils eine Speicherzelle pro ECC-Prüfbreite angefordert werden, das Inkrement für den Zugriff auf jede weitere Speicherzelle entspricht der ECC-Prüfbreite.

Zweckmäßiger Weise wird von der ECC-Einheit bei Ungleichheit der Daten des Codes bzw. der Prüfinformation mit der Zusatzinformation eine Unterbrechungsanforderung an den Prozessor signalisiert und ein Fehler angezeigt.

Weiterhin zweckmäßig ist, dass ein bei diesem Vergleich erkannter Fehler sogleich korrigiert wird, so dass die elektronische Steuerung trotz fehlerhafter Daten bzw. Codes weiterarbeiten kann.

Vorteilhafter Weise kann bei Einsatz des Margin Read, also bei Erreichen oder Unterschreiten der vorgebbaren Ladungsschwelle durch den aktuellen Ladungszustand ein Auffrischen des Ladungszustandes der jeweiligen Speicherzelle oder aller Speicherzellen der entsprechenden Wortleitung oder aller Speicherzellen des Speichers durchgeführt werden, da die korrekte Information noch herstellbar ist, entweder durch die ECC, oder durch Ändern der vorgebbaren Ladungsschwelle, oder durch Kombination beider Methoden. Ebenso kann bei diesem Ladungsvergleich auf einen zukünftigen Fehler geschlossen werden, wie oben erwähnt, und es besteht die Anzeigemöglichkeit eines zukünftigen Fehlers und gleichzeitig die Verhinderungsmöglichkeit betreffend diesen zukünftigen Fehler.

Weiterhin zweckmäßig ist, daß der Prozessor den Prüfcode nicht aus dem zu prüfenden Speicher abarbeitet, sondern aus einem anderen schnellen Speicher, insbesondere aus einem Cache oder separaten CodeRAM. Damit wird sichergestellt, daß einerseits nur die beabsichtigten Daten in der ECC-Einheit geprüft werden, und daß andererseits insbesondere beim Einsatz des MarginRead die Ausführung des Prüfcodes auch dann noch gewähleistet ist, wenn die vorgegebenen Ladungsschwellen nicht mehr erreicht werden und daher ein falscher Code zum Prozessor gesendet werden könnte, wenn dieser seine Instruktionen aus demselben Speicher beziehen würde.

Weitere Vorteile und vorteilhafte Ausgestaltungen ergeben sich aus der Beschreibung und den Merkmalen der Ansprüche.

### Zeichnung

Die Erfindung wird im Folgenden anhand der in der Zeichnung dargestellten Figuren näher erläutert. Dabei zeigt
Figur 1 ein Steuergerät mit erfindungsgemäßer Hardware.
In Figur 2 ist ein erfindungsgemäßer Speicher mit einzelnen Speicherzellen dargestellt und
Figur 3, bestehend aus Figur 3a und 3b verdeutlicht die Erfindung anhand eines speziellen Ausführungsbeispiels in Form eines Flussdiagramms.

### Beschreibung der Ausführungsbeispiele

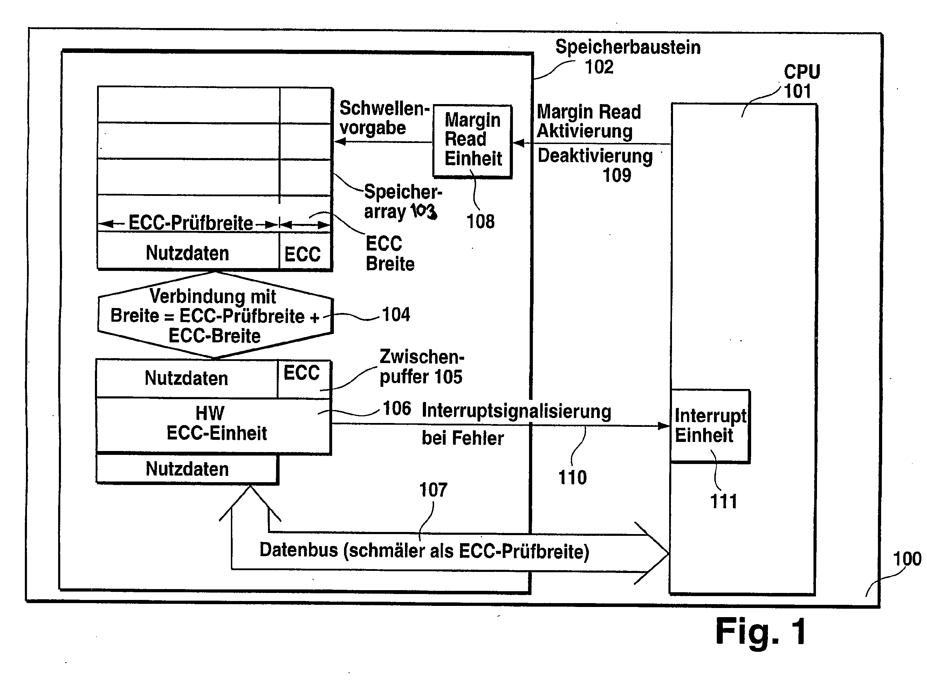

Figur 1 zeigt eine elektronische Steuerung bzw. ein Steuergerät 100, in dem ein Speicher 102 und eine Steuereinheit 101, insbesondere ein Prozessor, enthalten sind. Steuereinheit und Speicher mit ECC-Hardware sind über einen bidirektionalen Datenbus 107 miteinander verbunden. Mit 104, 105 und 106 sind erste Mittel bezeichnet, die den Vergleich der Prüfinformation mit der Zusatzinformation durchführen, die also weitestgehend der ECC-Hardware entsprechen. Mit 108 sind Ladungsprüfmittel dargestellt, durch welche der Margin Read aktivierbar ist, also der Ladungszustand der Speicherzelle prüfbar ist. 110 zeigt Unterbrechungsmittel, die eine Fehlerreaktion bei Erkennung eines Fehlers, insbesondere eben eine Unterbrechung, einen Interrupt, auslösen. Die Verarbeitungseinheit der Unterbrechung im Prozessor ist mit 111 gekennzeichnet. Zur Verdeutlichung der einzelnen Aspekte der Erfindung sind alle Mittel separat dargestellt. Diese Mittel können aber auch in einen Block, also integriert vorhanden sein, und zwar im Prozessor oder in der Speichereinheit 102 selbst, aber auch außerhalb und lediglich mit dem Prozessor und dem Speicher verbunden. Weiterhin können Fehler angezeigt werden, beispielsweise durch ein Anzeigemittel, das über eine Verbindung insbesondere mit dem Prozessor in Verbindung steht.

Beim Lesen einer Information, insbesondere einer Speicherzelle des Speicherarrays 103 als Daten wird der Zwischenpuffer 105 der ECC-Einheit 106 über die schnelle bidirektionale Verbindung 104 in voller ECC-Prüfdatenbreite einschließlich der Zusatzinformationen, also beispielsweise 64 Bit Daten + 8Bit Zusatzinformationen, aus dem Speicher geladen und auf die Daten in ECC-Prüfdatenbreite durch die ECC-Hardware, hier 106, die Error-check- and Correction-Funktion ausgeführt. Wenn die ECC einen Fehler feststellt, wird ein Interrupt an die CPU, also an die Interruptverarbeitungseinheit 111 bzw. den Prozessor gesamt 101 ausgelöst.

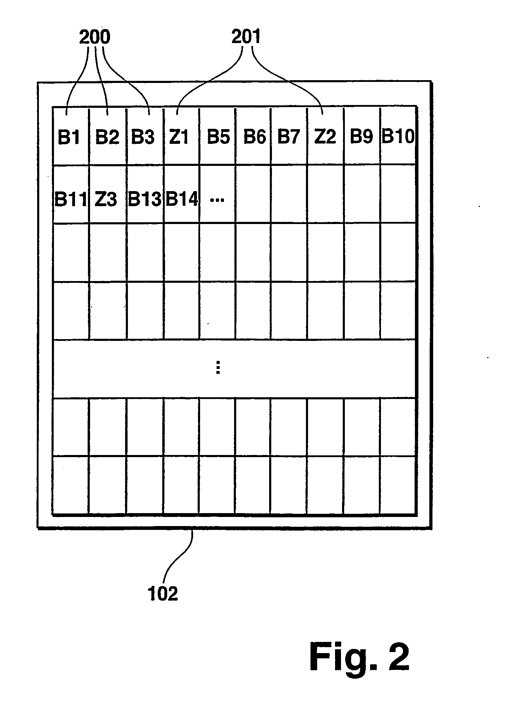

Zur Erläuterung des Verfahrens ist der Speicher in Figur 2 noch einmal detailliert dargestellt. Darin sind Speicherzellen 200 und 201 enthalten. Die Speicherzellen 200 enthalten dabei Steuerbefehle und/oder Daten als Code, also als binäre Information, beispielsweise immer 8-Bit-weise als Byte B1, B2, B3, B5 usw. Dazwischen sind in diesem speziellen Beispiel in Speicherzellen 201 die genannten Zusatzinformationen Z1, Z2, Z3 usw. abgelegt. Wird nun eine Speicherzelle aktiviert, beispielsweise B1, so wird über die Verbindungsleitung 104 ein Datenwort der kompletten Wortbreite, in unserem Beispiel 32 Bit, also 4 Byte ausgelesen. Wenn sich die Zusatzinformationen und die Daten bzw Code im selben Speicher befinden, wird auf diese Art, beispielsweise mit 32 Bit, die Information aus den Speicherzellen B1, B2, B3 und der Zusatzinformationsspeicherzelle Z1 ausgelesen mit vier mal 8 Bit, bei einer 32bit-Verbindungsleitung in einem einzigen Transfer. Die genannte ECC-Hardware 106 kann daraufhin in einem einzigen Zugriff über die gesamte ECC-Prüfbreite im ECC-Zwischenpuffer 105 die Fehlerprüfung und eventuelle Korrektur durchführen. Die Zusatzinformation, hier z. B. Z1, kann dabei mit Hilfe verschiedener Methoden gebildet und ausgewertet werden, was entsprechend dem jeweiligen Verfahren eine entsprechende ECC-Hardware 106 voraussetzt. Dabei ist neben dem Cyclic Redundancy Check CRC jedes andere diesbezügliche Verfahren, wie beispielsweise Hemming-Code, Berger-Code, Aufsummieren, insbesondere Parity-Bit-Bildung usw. denkbar, möglich und erfindungsgemäß vorgegeben. Je nach gewähltem Verfahren kann die Zusatzinformation eine oder mehrere Speicherzellen umfassen. Ebenso muss die Zusatzinformation nicht wie hier immer auf die jeweiligen Daten-Speicherzellen folgen, sondern kann ebenso in einem separaten Speicherbereich des Speicherarrays 103, aber ebenso in einem separaten Speicher abgelegt sein. Wichtig ist nur eine direkte Zuordnung der entsprechenden Speicherzellen mit den zu prüfenden Daten und der entsprechenden Zusatzinformation. Dann könnte auch, anders als im Beispiel, wo die Zusatzinformation in der vom Speicherarray übertragenen Wortbreite selbst enthalten ist, über separate Leitungen neben der normalen Wortbreite die Zusatzinformation der ECC-Hardware zugeführt werden. Wesentlich ist dabei, dass keine vollständige Checksummenberechnung im Prozessor im Sinne einer Aufnahme jeder einzelnen Speicherzelle nötig ist, sondern dass ein vollständiger Test durch einen einzigen Zugriff in der ECC-Hardware möglich wird, ohne daß alle zu testenden Daten an den Prozessor übertragen werden müssen. Die Wortbreite von 32 Bit ist dabei beliebig gewählt. Natürlich kann auch jede andere Wortbreite wie 8, 16, 24 Bit oder auch eine individuell gewählte andere Wortbreite verwendet werden. Wird z. B. 64 Bit ECC-Prüfbreite verwendet, werden gleichzeitig 64Bit Daten und die 8 Bit für die ECC gelesen und der ECC-Check durchgeführt, sobald der Prozessor auch nur Teile davon anfordert. Dadurch reicht die Lesenanforderung vom Prozessor von beispielsweise 16 oder 32 Bit eines Speicherbereiches aus, um die Korrektheit einer 64 Bit-Gruppe zu bewerten. Der Prozessor selbst kann die angelieferten Daten ohne weiteren Vergleich ignorieren. Dies ist aus dem Grund möglich, falls falsche Daten gelesen wurden, würde eine Unterbrechung, also ein Interrupt von der ECC-Einheit ausgelöst werden. Somit könnten auch 256 Bit Informationsspeicher, also Daten, und 32 Bit ECC-Information in einem Schritt prüfbar sein.

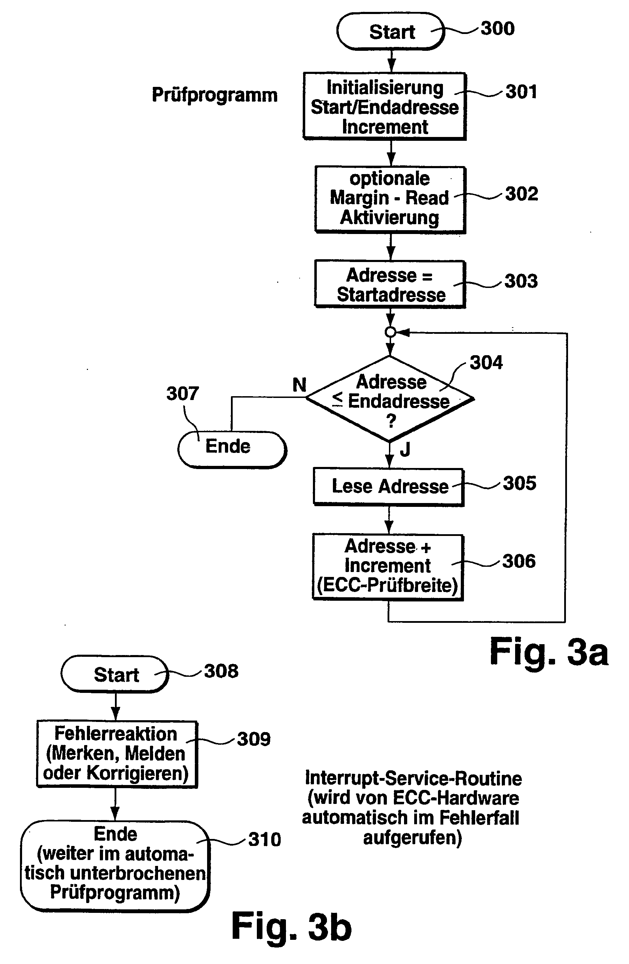

Der Vorteil des genannten Verfahrens liegt auf der Hand: Dadurch, dass im Prozessor keine Checksumme separat wie im Stand der Technik gerechnet werden muss, können die Lesezugriffe auf den Speicher unmittelbar aufeinander folgen, was für eben genanntes Beispiel bedeuten würde, dass zum Einen mit der CRC-Methode folgende Zeit benötigt würde: 3 Takte, um 32 Bit zu lesen, dann addieren der 32 Bit zur Checksumme, was wiederum 3 Takte erfordert, und das Ganze 2 Mal um 64 Bit zu bewerten. Dies hätte zur Folge, dass (3 + 6) x 2 = 12 Takte als Zeitminimum zur Berechnung der Checksumme notwendig wären. Für die erfindungsgemäße Methode, die in Figur 3 noch einmal detailliert dargestellt wird, würden nur die ersten drei Takte, eben um 32 Bit zu lesen, benötigt. Damit ergibt sich eine Verkürzung im angegebenen Beispiel um mindestens 75%.

Dadurch ergibt sich die Nutzung der ECC zur schnellen Überprüfung des gesamten Speicherinhaltes im Gegensatz zu Verfahren, die auf dem Bewerten der Information jeder Speicherstelle bzw. jeder Speicherzelle durch eine Ausführungseinheit beruhen.

Das Verfahren selbst wird nun noch einmal in Figur 3 bestehend aus Figur 3a und 3b ausführlich dargestellt. Dazu ist im Block 300 von Figur 3a der Start des Verfahrens dargestellt. Im Block 301 erfolgt die Initialisierung, was bedeutet, dass beispielsweise die Startadresse und die Endadresse gesetzt wird und das oben angesprochene Inkrement, festgelegt wird. Dabei wird das optimale Inkrement von der ECC-Prüfbreite der ECC-Hardware vorgegeben, da immer eine komplette ECC-Prüfbreite geladen und von der ECC bewertet wird, dies ist aber in jedem Fall ein Mehrfaches der Lesewortbreite,die an den Prozessor übertragen wird.

Im Block 302 wird optional der Margin Read, also das Ladungsschwellenverfahren, eingeschaltet. Dazu werden die Speicherzellen, insbesondere die ausgewählten Speicherzellen, nicht mit der normalen Bitleitungslast, sondern mit einer erhöhten Last ausgelesen, bzw. der Zellstrom wird gemessen. Wenn die Ladung der Zellen noch ausreichend ist, wird die Information richtig ausgelesen.. Wenn nicht, wird die falsche Information ausgelesen, was automatisch von der ECC-Einheit bemerkt und signalisiert wird. Das mögliche Einschalten bzw. Zuschalten dieses optionalen zusätzlichen Verfahrens, also des Margin Reads kann nun eben im Block 302 durchgeführt werden.

Im Block 303 wird nun die Adresse gleich der Startadresse gesetzt. Im Block 304 erfolgt nun die Abfrage, ob die gelesene Adresse kleiner oder gleich der gesetzten Endadresse ist. Ist dies der Fall, wird im Block 305 der Inhalt der Adresse vom Speicher angefordert. Parallel erfolgt nun in der ECC-Einheit die Anforderung der Daten für die gesamte ECC-Prüfbreite aus dem Speicher, optional mit aktiviertem MarginRead, was den Vorteil hat, dass zukünftig auftretende Fehler ebenfalls erkannt werden können.

Im Fehlerfall unterbricht die ECC-Einheit das Prüfprogramm auf dem Prozessor und aktiviert mittels der Interrupteinheit die Interrupt-ServiceRoutine ab Block 308 gemäß Figur 3b. In Block 309 kann der Fehler angezeigt, gemeldet oder korrigiert werden. Dabei kann dann nochmals, hier nicht dargestellt, eine Unterscheidung getroffen werden, ob der Fehler bereits vorhanden ist oder zukünftig auftreten wird. Abhängig davon können unterschiedliche Fehlerreaktionen erfolgen. Bei Erreichen oder Unterschreiten der vorgebbaren Ladungsschwelle im Margin Read durch den aktuellen Ladungszustand erfolgt beispielsweise als Korrektur ein Auffrischen des Ladungszustandes der jeweiligen Speicherzelle oder aller Speicherzellen einer Wortleitung oder aller Speicherzellen des gesamten Speichers. Eine Anzeige dieses Fehlers kann dann beispielsweise über eine Anzeigeeinheit realisiert werden. Ebenso kann aber ein erkannter Fehler auch in einem Fehlerspeicher abgelegt und später ausgelesen werden. Als Reaktion auf einen solchen Fehler kann einmal die Korrektur des Fehlers erfolgen, oder auch das Umschalten in einen Notfahrbetrieb oder auch das Anzeigen des Fehlers und Abbrechen des Startvorganges, je nachdem, wie kritisch der Fehler eingestuft wird. D. h. den Fehlern können unterschiedliche Prioritätsklassen zugeordnet werden; entweder vorgegeben durch eine Tabelle oder aber abhängig davon, durch welche und wie viele Fehlererkennungsmechanismen, also ECC-Check und Margin Read, nur ECC-Check oder nur Margin Read der Fehler erkannt wurde.

Nachdem die Fehlerbehandlung abgeschlossen ist, wird die Interrupt-Serviceroutine im Block 310 beendet und die Abarbeitung des unterbrochenen Prüfprogrammes in Block 306 fortgesetzt, in dem die aktuelle Adresse dann mit Adresse plus Inkrement neu belegt wird. Ohne die gelieferten Daten weiter zu verarbeiten, erfolgt nun ein Rücksprung in Block 304 Dort wird mit der nun um das Inkrement erhöhten Adresse geprüft, ob diese Adressse kleiner oder gleich der Endadresse ist. Ist dies immer noch der Fall, wird in der eben genannten Schleife vom Block 305, 306 und 304 verblieben; ansonsten, wenn die Endadresse erreicht ist, erfolgt im Block 307 das Ende des Verfahrens.

So wird entsprechend des genannten Verfahrens zum Einen durch die gezeigte Vorrichtung die elektronische Steuerung überwacht, in dem Mittel enthalten sind, die außerhalb der laufenden Instruktionszugriffe die gesamten Daten des wenigstens eines Speichers prüfen, indem je ECC-Prüfbreite genau eine Speicherzelle vom Prozessor angefordert wird, und die Mittel dadurch die komplette Daten pro ECC-Prüfbreite einschließlich der Zusatzinformationen in den ECC-Zwischenpuffer laden, wobei Prüfmittel in der ECC-Einheit enthalten sind, die aus den Daten pro ECC-Prüfbreite eine Prüfinformation bilden und die Prüfinformation mit der gespeicherten Zusatzinformation vergleichen, wie dies beispielsweise in den Mitteln 106 durchgeführt wird. Ebenso sind für den Margin Read Prüfmittel 108 enthalten, die bei der ausgewählten Speicherzelle der jeweiligen Wortline einen aktuellen Ladungszustand ermitteln bzw. die Daten mit veränderter Schwelle auslesen. Als Fehlerreaktionsmöglichkeit sind Unterbrechungsmittel enthalten, die bei Ungleichheit der Prüfinformation und der Zusatzinfonnation und/oder bei Erreichen oder Unterschreiten der vorgebbaren Ladungsschwelle durch den aktuellen Ladungszustand eine Unterbrechung auslösen, wie hier mit 110 dargestellt.

Durch das erfindungsgemäße Verfahren und die erfindungsgemäße Vorrichtung kann somit bei einer elektronischen Steuerung zur Steuerung von Betriebsabläufen, insbesondere bei einem Fahrzeug, aber auch bei anderen Geräten oder Einrichtungen, eine Prüfung des gesamten Speicherbereichs, also aller Speicherzellen vor dem Start in kurzer Zeit durchgeführt werden, so dass zum Einen die zyklische Prüfung insbesondere immer vor dem Start, und zum Anderen die Prüfung aller Speicherzellen möglich ist und so eine Sicherheitserliöhung ohne Komforteinbußen nach sich zieht.

## Patentansprüche

1. Verfahren zur Überwachung einer elektronischen Steuerung, wobei Steuerbefehle und/oder Daten als Code in wenigstens einem Speicher (102) abgelegt sind, wobei bei laufenden Instruktionszugriffen der Code über eine Wortleitung aus dem wenigstens einen Speicher (102) zu einer Steuereinheit (101) mit einer bestimmten Wortbreite, insbesondere zu einem Prozessor, zur Steuerung von Betriebsabläufen übertragen wird, wobei die Wortbreite den Code mehrerer Speicherzellen (B1, B2, B3) des Speichers umfasst und zu dem Code einer Wortbreite jeweils eine Zusatzinformation (Z1) gebildet und im Speicher (102) abgelegt wird, **dadurch gekennzeichnet, dass** außerhalb der laufenden Instruktionszugriffe der gesamte Code des wenigstens einen Speichers (102) **dadurch** geprüft wird, indem je Wortbreite genau eine Speicherzelle (B1) ausgewählt wird und **dadurch** die vollständige Wortleitung (B1, B2, B3, Z1) bestehend aus dem Code mehrerer Speicherzellen entsprechend der Wortbreite und der Zusatzinformation aktiviert wird, wobei aus dem Code der Speicherzellen (B1, B2, B3) der vollständigen Wortleitung eine Prüfinformation gebildet wird und die Prüfinformation mit der gespeicherten Zusatzinformation (Z1) verglichen wird.

2. Verfahren nach Anspruch 1, **dadurch gekennzeichnet, dass** die Prüfung von einer ECC-Einheit (106) durchgeführt wird und die Wortbreite einer ECC-Prüfwortbreite entspricht, so dass die ECC-Prüfwortbreite den Code mehrerer Speicherzellen (B1, B2, B3) des Speichers umfasst.

3. Verfahren nach Anspruch 2, dass die ECC-Prüfwortbreite ein Mehrfaches einer Lesewortbreite der Steuereinheit entspricht.

4. Verfahren nach Anspruch 2, **dadurch gekennzeichnet, dass** je Anforderung der Steuereinheit nach dem Inhalt einer Speicherzelle des Speichers die ECC-Einheit automatisch in vollständiger ECC-Prüfwortbreite einschließlich Zusatzinformation befüllt wird und aus dem Code der vollständigen ECC-Prüfwortbreite die Prüfinformation gebildet und mit der Zusatzinformation (Z1) verglichen wird.

5. Verfahren nach Anspruch 1, **dadurch gekennzeichnet, dass** bei der ausgewählten Speicherzelle (B1) zusätzlich ein aktueller Ladungszustand ermittelt wird und dieser mit einer vorgebbaren Ladungsschwelle verglichen wird.

6. Verfahren nach Anspruch 2, **dadurch gekennzeichnet, dass** bei der ausgewählten Speicherzelle (B1) zusätzlich der Code mit einer vorgebbaren Ladungsschwelle ausgelesen wird und durch Vergleich mit der Ladungsschwelle die Richtigkeit des Codes durch die ECC-Einheit geprüft wird.

7. Verfahren nach Anspruch 1, **dadurch gekennzeichnet, dass** die Auswahl der Speicherzelle (B1) der jeweiligen Wortbreite (B1, B2, B3) durch wiederholtes Setzen eines Inkrements ausgehend von einer Startadresse einer ersten Speicherzelle erfolgt, wobei jede Speicherzelle im Abstand des Inkrements ausgewählt wird.

8. Verfahren nach Anspruch 2 und 7, **dadurch gekennzeichnet, dass** ein vorgegebenes Inkrement entsprechend der ECC-Prüfwortbreite wiederholt beginnend mit der Startadresse aufaddiert wird und die entsprechenden Speicherzellen ausgewählt werden.

9. Verfahren nach Anspruch 1, **dadurch gekennzeichnet, dass** bei Ungleichheit der Prüfinformation und der entsprechenden Zusatzinformation eine Unterbrechung ausgelöst wird und ein Fehler anzeigbar ist.

10. Verfahren nach Anspruch 1, **dadurch gekennzeichnet, dass** bei Ungleichheit der Prüfinformation und der entsprechenden Zusatzinformation ein Fehler erkannt wird und gemäß der Zusatzinformation korrigiert wird.

11. Verfahren nach Anspruch 5, **dadurch gekennzeichnet, dass** bei Erreichen oder Unterschreiten der vorgebbaren Ladungsschwelle durch den aktuellen Ladungszustand ein Auffrischen des Ladungszustandes der jeweiligen Speicherzelle oder aller Speicherzellen der entsprechenden Wortbreite oder aller Speicherzellen des Speichers durchgeführt wird.

12. Verfahren nach Anspruch 5, **dadurch gekennzeichnet, dass** bei Erreichen oder Unterschreiten der vorgebbaren Ladungsschwelle durch den aktuellen Ladungszustand ein zukünftiger Fehler erkannt wird und dieser zukünftige Fehler anzeigbar ist.

13. Vorrichtung zur Überwachung einer elektronischen Steuerung, wobei Steuerbefehle und/oder Daten als Code in wenigstens einem Speicher (102) abgelegt sind, wobei bei laufenden Instruktionszugriffen der Code über eine Wortleitung aus dem wenigstens einen Speicher (102) zu einer Steuereinheit (101) mit einer bestimmten Wort breite, insbesondere zu einem Prozessor zur Steuerung von Betriebsabläufen, übertragen wird, wobei die Wortbreite den Code mehrerer Speicherzellen (B1, B2, B3) des Speichers (102) umfasst und zu dem Code einer Wortbreite jeweils eine Zusatzinformation (Z1) gebildet und im Speicher abgelegt wird, **dadurch gekennzeichnet, dass** Mittel enthalten sind, welche außerhalb der laufenden Instruktionszugriffe den gesamten Code des wenigstens einen Speichers prüfen, indem je Wortbreite (B1, B2, B3) genau eine Speicherzelle (B1) ausgewählt wird und die Mittel **dadurch** die vollständige Wortleitung (B1, B2, B3, Z1) bestehend aus einem Code mehrerer Speicherzellen (B1, B2, B3) entsprechend der Wortbreite und der Zusatzinformation (Z1) aktivieren, wobei Prüfmittel enthalten sind, die aus dem Code der Speicherzellen (B1, B2, B3) der vollständigen Wortleitung eine Prüfinformation bilden und die Prüfinformation mit der gespeicherten Zusatzinformation (Z1) vergleichen.

14. Vorrichtung nach Anspruch 13, **dadurch gekennzeichnet, dass** die Vorrichtung als Mittel eine ECC-Einheit (106) umfasst.

15. Vorrichtung nach Anspruch 13, **dadurch gekennzeichnet, dass** weiterhin Ladungsprüfmittel (108) enthalten sind, die bei der ausgewählten Speicherzelle (B1) der jeweiligen Wortbreite einen aktuellen Ladungszustand ermitteln und diesen mit einer vorgebbaren Ladungsschwelle vergleichen.

16. Vorrichtung nach Anspruch 13 oder 14, **dadurch gekennzeichnet, dass** Unterbrechungsmittel (110) enthalten sind, die bei Ungleichheit der Prüfinformation und der Zusatzinformation (Z1) und/oder bei Erreichen oder Unterschreiten der vorgebbaren Ladungsschwelle durch den aktuellen Ladungszustand eine Unterbrechung auslösen.

17. Vorrichtung nach Anspruch 13 oder 14, **dadurch gekennzeichnet, dass** Anzeigemittel enthalten sind, die bei Ungleichheit der Prüfinformation und der Zusatzinformation und/oder bei Erreichen oder Unterschreiten der vorgebbaren Ladungsschwelle durch den aktuellen Ladungszustand einen Fehler anzeigen.

## Claims

1. Method for monitoring an electronic controller, control commands and/or data being stored in the form of code in at least one memory (102), the code being transmitted, via a word line, from the at least one memory (102) to a control unit (101) having a particular word width, in particular to a processor, during ongoing instruction access operations in order to control operating sequences, the word width comprising the code of a plurality of memory cells (B1, B2, B3) in the memory, and an item of additional information (Z1) respectively being formed for the code of a word width and being stored in the memory (102), **characterized in that** the entire code of the at least one memory (102) is checked outside the ongoing instruction access operations by selecting precisely one memory cell (B1) for each word width and thus activating the complete word line (B1, B2, B3, Z1) comprising the code of a plurality of memory cells in accordance with the word width and the additional information, an item of checking information being formed from the code of the memory cells (B1, B2, B3) of the complete word line and the checking information being compared with the stored additional information (Z1).

2. Method according to Claim 1, **characterized in that** the checking is carried out by an ECC unit (106) and the word width corresponds to an ECC checking word width, so that the ECC checking word width comprises the code of a plurality of memory cells (B1, B2, B3) in the memory.

3. Method according to Claim 2, **characterized in that** the ECC checking word width corresponds to a multiple of a read word width of the control unit.

4. Method according to Claim 2, **characterized in that**, for each request of the control unit for the contents of a memory cell in the memory, the ECC unit is automatically filled to the complete ECC checking word width including additional information, and the checking information is formed from the code of the complete ECC checking word width and is compared with the additional information (Z1).

5. Method according to Claim 1, **characterized in that** a current charge state is additionally determined for the selected memory cell (B1) and said charge state is compared with a prescribable charge threshold.

6. Method according to Claim 2, **characterized in that** the code is additionally read out with a prescribable charge threshold for the selected memory cell (B1) and the correctness of the code is checked by the ECC unit by comparing it with the charge threshold.

7. Method according to Claim 1, **characterized in that** the memory cell (B1) of the respective word width (B1, B2, B3) is selected by repeatedly setting an increment beginning with a start address of a first memory cell, each memory cell in the interval of the increment being selected.

8. Method according to Claims 2 and 7, **characterized in that** a prescribed increment is repeatedly added, in accordance with the ECC checking word width, beginning with the start address, and the corresponding memory cells are selected.

9. Method according to Claim 1, **characterized in that**, if the checking information and the corresponding additional information are different, an interrupt is triggered and an error can be displayed.

10. Method according to Claim 1, **characterized in that**, if the checking information and the corresponding additional information are different, an error is detected and is corrected in accordance with the additional information.

11. Method according to Claim 5, **characterized in that**, when the prescribable charge threshold is reached or undershot by the current charge state, the charge state of the respective memory cell or of all the memory cells of the corresponding word width or of all the memory cells in the memory is refreshed.

12. Method according to Claim 5, **characterized in that**, when the prescribable charge threshold is reached or undershot by the current charge state, a future error is detected and this future error can be displayed.

13. Apparatus for monitoring an electronic controller, control commands and/or data being stored in the form of code in at least one memory (102), the code being transmitted, via a word line, from the at least one memory (102) to a control unit (101) having a particular word width, in particular to a processor, during ongoing instruction access operations in order to control operating sequences, the word width comprising the code of a plurality of memory cells (B1, B2, B3) in the memory (102), and an item of additional information (Z1) respectively being formed for the code of a word width and being stored in the memory, **characterized in that** it contains means which check the entire code of the at least one memory outside the ongoing instruction access operations by selecting precisely one memory cell (B1) for each word width (B1, B2, B3) and which thus activate the complete word line (B1, B2, B3, Z1 comprising a code of a plurality of memory cells (B1, B2, B3) in accordance with the word width and the additional information (Z1), there being checking means which form an item of checking information from the code of the memory cells (B1, B2, B3) of the complete word line and compare the checking information with the stored additional information (Z1).

14. Apparatus according to Claims 13, **characterized in that** the apparatus comprises an ECC unit (106) as means.

15. Apparatus according to Claim 13, **characterized in that** it also contains charge checking means (108) which determine a current charge state for the selected memory cell (B1) of the respective word width and compare said charge state with a prescribable charge threshold.

16. Apparatus according to Claim 13 or 14, **characterized in that** it contains interrupt means (110) which trigger an interrupt when the checking information and the additional information (Z1) are different and/or when the prescribable charge threshold is reached or undershot by the current charge state.

17. Apparatus according to Claim 13 or 14, **characterized in that** it contains display means which display an error when the checking information and the additional information are different and/or when the prescribable charge threshold is reached or undershot by the current charge state.

## Revendications

1. Procédé de surveillance d'une commande électronique, selon lequel on enregistre des instructions de commande et/ou des données comme code dans au moins une mémoire (102), lors des accès aux instructions en cours le code est transmis par une ligne de mots de la mémoire (102) avec une largeur de mot déterminée, à une unité de commande (101) en particulier à un processeur, pour commander des déroulements d'exploitation, la largeur de mot comprenant le code de plusieurs cellules de mémoire (B1, B2, B3) de la mémoire, et on forme pour le code d'une largeur de mot respectivement une information supplémentaire (Z1) et on l'enregistre dans la mémoire (102),
**caractérisé en ce qu'**
à l'extérieur des accès aux instructions en cours on vérifie la totalité du code de la mémoire (102) en choisissant pour chaque largeur de mot précisément une cellule de mémoire (B1) et en activant ainsi la ligne de mot complète (B1, B2, B3, Z1) se composant du code de plusieurs cellules de mémoire selon la largeur de mot et l'information supplémentaire, et à partir du code des cellules de mémoire (B1, B2, B3) de la ligne de mot complète on forme une information de contrôle et on compare l'information de contrôle avec l'information supplémentaire (Z1) enregistrée.

2. Procédé selon la revendication 1,
**caractérisé en ce que**
le contrôle est effectué par une unité ECC (106) et la largeur de mot correspond à une largeur de mot de contrôle ECC, de telle sorte que la largeur de mot de contrôle ECC comprenne le code de plusieurs cellules de mémoire (B1, B2, B3) de la mémoire.

3. Procédé selon la revendication 2,
**caractérisé en ce que**
la largeur de mot de contrôle ECC correspond à un multiple d'une largeur de mot de lecture de l'unité de commande.

4. Procédé selon la revendication 2,
**caractérisé en ce qu'**
en fonction de la demande de l'unité de commande par rapport au contenu d'une cellule de mémoire de la mémoire, l'unité ECC est chargée automatiquement avec la largeur de mot de contrôle ECC complète, y compris l'information supplémentaire et, à partir du code de la largeur de mot de contrôle ECC complète, on forme l'information de contrôle et on la compare avec l'information supplémentaire (Z1).

5. Procédé selon la revendication 1,
**caractérisé en ce que**
pour la cellule de mémoire (B1) choisie on détermine en plus un état de charge réel et on le compare avec un seuil de charge prédéterminé.

6. Procédé selon la revendication 2,
**caractérisé en ce que**
pour la cellule de mémoire (B1) choisie on lit en plus le code avec un seuil de charge prédéterminé et l'unité ECC vérifie si le code est correct par une comparaison avec le seuil de charge.

7. Procédé selon la revendication 1,
**caractérisé en ce que**
le choix de la cellule de mémoire (B1) de la largeur de mot respective (B1, B2, B3) s'effectue par le placement répété d'un incrément à partir d'une adresse de démarrage d'une première cellule de mémoire, selon lequel chaque cellule de mémoire est choisie à distance de l'incrément.

8. Procédé selon les revendications 2 et 7,
**caractérisé en ce qu'**
un incrément prédéterminé selon la largeur de mot ECC est additionné de façon répétitive en commençant avec l'adresse de démarrage, et on sélectionne les cellules de mémoire correspondantes.

9. Procédé selon la revendication 1,
**caractérisé en ce qu'**
on déclenche une interruption si l'information de contrôle et l'information supplémentaire ne correspondent pas, et on affiche un défaut.

10. Procédé selon la revendication 1,
**caractérisé en ce que**
lors d'une non-correspondance de l'information de contrôle et de l'information supplémentaire correspondante, un défaut est détecté et corrigé selon l'information supplémentaire.

11. Procédé selon la revendication 5,
**caractérisé en ce que**
si l'état de charge réel a atteint le seuil de charge prédéterminé ou se situe en dessous de celui-ci, on fait un rafraîchissement de l'état de charge de la cellule de mémoire respective ou de toutes les cellules de mémoire de la largeur de mot correspondante ou de toutes les cellules de mémoire de la mémoire.

12. Procédé selon la revendication 5,
**caractérisé en ce que**
si l'état de charge réel a atteint le seuil de charge prédéterminé ou se situe en dessous de celui-ci, un défaut futur est détecté et peut être affiché.

13. Dispositif de surveillance d'une commande électronique, avec des instructions de commande et/ou des données enregistrées comme code dans au moins une mémoire (102), dans lequel lors des accès aux instructions en cours le code est transmis par une ligne de mots de la mémoire (102) avec une largeur de mot déterminée, à une unité de commande (101) en particulier à un processeur, pour commander des déroulements d'exploitation, la largeur de mot comprenant le code de plusieurs cellules de mémoire (B1, B2, B3) de la mémoire (102), et pour le code d'une largeur de mot on forme respectivement une information supplémentaire (Z1) et on l'enregistre dans la mémoire,
**caractérisé en ce qu'**
il comprend des moyens qui, à l'extérieur des accès aux instructions en cours, vérifient la totalité du code de la mémoire en choisissant pour chaque largeur de mot (B1, B2, B3) précisément une cellule de mémoire (B1), et les moyens activent ainsi la ligne de mot complète (B1, B2, B3, Z1) se composant d'un code de plusieurs cellules de mémoire (B1, B2, B3) selon la largeur de mot et l'information supplémentaire (Z1), et des moyens de contrôle qui, à partir du code des cellules de mémoire (B1, B2, B3) de la ligne de mot complète, forment une information de contrôle et comparent l'information de contrôle avec l'information supplémentaire (Z1) enregistrée.

14. Dispositif selon la revendication 13 ;
**caractérisé en ce que**
le dispositif comprend comme moyen une unité ECC (106).

15. Dispositif selon la revendication 13,
**caractérisé en ce qu'**
il comprend en outre des moyens de contrôle de charge (108) qui, pour la cellule de mémoire (B1) choisie de la largeur de mot respective, déterminent un état de charge réel et le comparent avec un seuil de charge prédéterminé.

16. Dispositif selon la revendication 13 ou 14,
**caractérisé en ce que** qu'
il comprend des moyens d'interruption (110) qui déclenchent une interruption si l'information de contrôle et l'information supplémentaire (Z1) ne correspondent pas et/ou si un seuil de charge prédéterminé est atteint ou pas par l'état de charge réel.

17. Dispositif selon la revendication 13 ou 14,
**caractérisé en ce qu'**
il comprend des moyens d'affichage qui affichent un défaut si l'information de contrôle et l'information supplémentaire ne correspondent pas et/ou si un seuil de charge prédéterminé est atteint ou pas par l'état de charge réel.
